# EUROPEAN PATENT SPECIFICATION

(11) **EP 1 772 527 B1**
(45) Date of publication and mention of the grant of the patent: **18.05.2011**
(21) Application number: 06466013.7
(22) Date of filing: 02.10.2006
(51) Int. Cl.: C22B 1/24, C22B 1/248, C22B 7/02

(54) **Method for production of an addition briqutte**
Verfahren zur Herstellung eines Zusatzbrikettes
Procédé de fabrication d'une briquette d'addition

(30) Priority: 04.10.2005 CZ 20050629; 31.03.2006 CZ 20060215
(43) Date of publication of application: 11.04.2007
(73) Proprietor: Gajdzica, Karel, 739 61 Trinec 5 (CZ); Gajdzica, Martin, 739061 Trinec 5 (CZ)
(72) Inventor: Gajdzica, Karel, 739 61 Trinec 5 (CZ); Gajdzica, Martin, 739061 Trinec 5 (CZ)
(74) Representative: Belfin, Vladimir

(56) References cited:
- EP-A1- 1 329 524
- WO-A-2004/050924
- DE-A1- 4 432 721
- US-A- 4 119 455
- DATABASE WPI Week 197910 Derwent Publications Ltd., London, GB; AN 1979-19123B XP002414497 & JP 54 013409 A (NIPPON STEEL CORP) 31 January 1979 (1979-01-31)
- DATABASE WPI Week 197736 Derwent Publications Ltd., London, GB; AN 1977-63675Y XP002414498 & JP 52 088520 A (JAPAN METAL AND CH KK) 25 July 1977 (1977-07-25)

## Description

### Field of the Invention

The invention relates to a method of the production of an addition briquette from metal bearing and non-metallic metallurgical wastes for utilization in a charge into metallurgical units.

### Background of the Invention

At present briquettes made from metallurgical wastes as an addition into a charge of metallurgical units are rather commonly used in the metallurgical field, and that above all with the object of otherwiseproblematic liquidation of these wastes on the one hand and of effective utilization of elements contained in them on the other hand. By briquetting of these wastes for their direct using in the charge of metallurgical units substantially diminished costs of their treatment are achieved than by up to this time also commonly used treatment of these wastes through sintering.

For example, pursuant to the published application of invention CZ PV 4215-90 a dry method of cold briquetting of metallurgical dusts, in which metallurgical dust, especially steel dust generated in oxygen injection in a mixture with at least one of substances such as lime, dolomite, magnesite, dunite, olivine and bauxite in the burnt or unburnt form is at normal 20°C temperature by pressureabove 1000 MPa compacted for transportable dust-free briquettes is known.

There is also known a method of production of cold pressed briquettes from metallurgical waste substance containing iron, such as scale by mixing of this metallurgical waste substance with a binder made up of one or more components, for example, hydrated lime and molasses pursuant to the published application of invention CZ PV 1523-94. The principle of this method consists in the fact that scale is mixing with hematite fine substance with formation of a covering layer composed of particles of hematite solid substance and containing single magnetite particles and subsequently the binder is admixed.

The document EP 1 329 524 discloses the production of brittle compacts from metallurgical wastes with a certain oil content, to which 2-30 wt% of a solidification assistant such as calcined lime is added, optionally together with 5-50 wt% coke and 10-30 wt% recovery dusts from steelmaking processes. The brittle compact is crushed and later used to make steelmaking briquettes.

The document DE 4432721 discloses a briquette for use as a metallurgical charge comprising 70-98 wt% metallurgical waste such as mill scale, grinding sludges and dust together with burnt lime in a quantity depending on the oil and water content of the waste material and an organic binder.

The document WO 2004/050924 discloses cold briquettes made by mixing 84-95 wt% of metallurgical or mineral or carbonaceous or oil contaminated materials in the form of dust/fines/sludge with 4-10 wt% of an iron bearing hydraulic mineral binder, optionally with 2-6 wt% water and 0.05-0.20 wt% of a surface active agent. The agglomerated mass is cured for 3 to 20 days.

The document JP 54013409 discloses the production of green pellets from metallurgical sludge whereby cement is added to the sludge and optionally also dust, the mixture is granulated into pellets and left to cure in air for 7 to 30 days.

The document US 5556457 discloses a briquette consisting essentially of revert materials and a single binder consisting of Portland cement, wherein the revert materials comprise, by weight percent, about 20-60% blast furnace flue dust, about 10-40% blast furnace sludges and about 10-50% mill scale, said agglomerate being produced by the method comprising mixing the revert materials together, adding sufficient water to increase the moisture content of the revert materials to about 14 to 20% by weight, then adding Portland cement as a sole binder in an amount of about 10 to 15% by weight of the revert/ cement mixture, mixing the wet revert materials and cement together to form a mixture, casting the mixture, curing the cast mixture to hydrate the cement thereby improving the high-temperature strength of the cast material, breaking the cast material into particles suitable for recycling into a blast furnace.

The document US 4078902 discloses a coke briquette for use in iron foundries in which coke fines screened from coke being fed to the cupola are recycled into briquette form to be used in place of raw coke in the iron making process. A mix for making the briquettes employs an 80-10-10 percentage by weight ratio of coke fines, high early cement and fly ash respectively to which water is added in a two- step process. The fines have their external surfaces pre-wetted prior to the adding of the fly ash, cement and additional water for activating the cement. The resulting mix is then formed and cured into cylindrical briquettes by conventional block-making apparatus.

A drawback of above mentioned methods of treatment of these wastes, if you like briquettes made from them is however fact, that these known solutions are essentialy limited only for very strict group of wastes. These solutions can not be used at all, for example, for treatment of unstable metallurgical metal bearing wastes, such as especially metallurgical waste sludges in which various chemical reactions exerting negative influence upon stability, strength and shape of eventually from them produced charging material take place for a long time. For these reasons till this time the metallurgical waste sludges are universally only put aside if you like put on areas reserved for that purpose. Materials stored by this way then taint living environment and quantity of them always enlarges.

The known methods of further using of these wastes are inefficient inasmuch as they are used only sporadicly, for example, in the production of cement. There is further known a method of treatment of fine-grained metallurgical fly ashes and sludges with content of zinc and lead for basic partly metallized pellets and zinc-lead dust by reduction of fine-grained fly ashes and sludges in eventual presence of fluxing agent pursuant to the application of invention CZ PV 550-91. The fine-grained fly ash and/or sludge is at the same time mixed with lime in amount necessary for achivement of basicity of resulting mixture of 2.5 to 5, after which the mixture is homogenized and pelletized to obtain pellets of size in the range of 3 to 25 mm and these pellets are reduced at 980°C to 1050°C tempetrature for 1 to 5 hours.

Pursuant to the published application of invention CZ PV 3911-89 there is also known a metallothermic method of treatment, in this case of sludges discharged from hardening shop according to which 18 to 28 parts by Wt. of sludges from hardening shop are mixed with 62 to 82 parts by Wt. of aluminium shot and eventually with to 10 parts by Wt. of unslaked lime after which the aluminothermic reaction is induced which results in steel sinter for a charge into steel-making furnace.

As it follows from above the known treatment of metallurgical waste sludges is very problematic, with great technological demands and in many cases unsuitable both from the point of view of type of the treated sludges and from the standpoint of their use as an addition into a charge of various metallurgical units.

Besides of the metallurgical waste sludges and further metallic wastes, the present state of technics does not solve the treatment and further metallurgical utilization of non-metallic waste powdery or fine lump particles, for example, of undersize coke or waste graphite from graphite electrodes, eventually limestone and the like in a sufficient degree, too.

An object of the present invention is therefore to provide as effectively as possible compacting, if you like treating of these materials for such a state, so that they should be again capable of charging on a large scale, which means so that they should get sufficient lumpiness, abrasion resistance and strength to be well meltable and so that they should not fall to powder components again during handling and melting.

### Summary of the Invention

This object is solved by a method of the production of an addition briquette for utilization in a charge into metallurgical units according to claim 1.

The addition briquette comprises 50 to 98% by Wt. of metal bearing and/or non-metallic metallurgical wastes in the form of fine powdery portions, fines and/or stabilized metallurgical sludges, collected flue dusts or other originally unstable substances and their mixtures as a basic component, further 1 to 25% by Wt. of binders, water and eventually accompanying waste admixtures in the rest.

The optimum lower limit of amount of metal bearing and/or non-metallic wastes in the addition briquette represents at the same time about 70% by Wt., under this limit eventually under the lower requested limit of 50% by Wt. however the solution according to the invention need not already get benefit and efficiency especially from the standpoint of utilization for charges of metallurgical units.

With regard to the present state of technics, an advantage of the addition briquette according to the invention is above all possibility of its composition mostly of originally unstable waste substances, such as metallurgical sludges the treatment of which is sonsiderably problematic as mentioned above. The metallurgical sludges are generated in exhaustion of combustion gases from metallurgical processes in cleaning shops, where these combustion gases are sprayed by water on filters and in this manner powdery particles contained in them are removed in the form of sludges. These sludges are then concentrated and dumped. Chemical reaction is subsequently induced in the course of which metallic iron gradually oxidizes for ferric oxide on the dumping ground. Temperature arises to 1000°C in this reaction and a course of reaction and temperature level are uncalculatable. Besides of metallic iron constituting usually the greatest deal in sludges, these sludges comprise further various metallic and non-metallic elements and their compounds. That is why further reactions are induced in dumped metallurgical sludges at the same time, mechanism of which is not sufficiently described to date.

In accordance with various alternative embodiments of the addition briquette according to the invention however its basic component can be composed, for example, even of undersize coke only, which makes possible its more effective utilization in metallury and that not only as a power source but also as the carburizing agent and so on.

Only stabilized waste metal bearing metallurgical sludges or also other metal bearing or non-metallic wastes, for example, fine and powdery portions of limestone, graphite, anthracite or powdery calcinated petroleum coke can also compose this basic component in other alternative embodiments, and the solution according to the invention presents high-effective method of liquidation or further utilization of these otherwise difficultly treatable materials. Such addition briquettes serve then also as a significant source of elements in them contained. Powdery or fine fraction of bauxite, ground converter lining and slag with a higher content of iron generated in metallurgical furnaces, such as pit furnace or heating furnaces in connection with heating of, for example, ingots or rolled products, or their derivatives can be added into this basic component, too.

The basic component of the addition briquette according to the invention can be naturally composed by a mixture of all mentioned wastes and that in various proportions with that the addition briquette is suitable not only as a metal bearing element, carburizing agent and power source but at the same time as a slag-forming addition and thus, in its substance, forms a part of the charge according to requirements of customer. Besides of all above named wastes, especially mentioned stabilized metallurgical sludges, the addition briquette according the invention can surely contain also other non-waste materials which otherwise form usual part of the charge and that in amount of 25 to 70% by Wt.. These materials can be represented, for example, by charging coke and the like.

As to the form of fines the addition briquette according to the invention can comprise 1 to 80% by Wt. of ferritic portion composed by, for example, scale, steel or cast-iron chips, fine lump particles of ferritic scrap or needles, shot or mixtures thereof. An improvement of physico-chemical properties of addition briquettes, such as increase of iron content and increase of strength of briquette takes place in this way.

The principle of the invention consists in the method of production of these addition briquettes in which metallurgical wastes in the form of dust and/or fines or sludges together with a binder and water are mixed mutually at required ratio after which they are treated under the pressure for desirable shape, for example, by compacting or ramming. Compacting and ramming preferably along with a composite action of vibrations are carried out at the same time.

An amount of used binder and water largely depends on a character of compacted or rammed metallurgical wastes, for example, of water amount in treated metallurgical sludge, and it should be naturally as small as possible, and then especially an amount of a binder is then given by requirements on sufficient strength of the addition briquette. The size of single particles of such treated wastes, if you like eventual necessity of crushing of solid wastes depends on the size of produced addition briquettes whereas production of addition briquettes of smaller dimensions requires smaller fractions and the opposite of that.

Already above mentioned fact that various chemical reactions take place in these sludges with regard to their composition, which would result in smaller strength and coherence of addition briquettes, eventually in their total collapse, presents problem of the treatment, for example, of some waste metallurgical sludges in the production of addition briquettes. The principle of the method of production according to the invention therefore further consists in the fact that these metallurgical wastes in the form of metal bearing and non-metallic metallurgical sludges in which these reactions can take place are at first stabilized by admixing of the stabilizing agent, after which they are exposed to its action for stabilization time with the object of ending of these reactions. Collected metallurgical flue dusts generating in dedusting of metallurgical technological processes are subjected to stabilization, too. Very fine powdery substances which are separated on filters in dry state and comprise besides of iron also further metallic and non-metallic elements and their compounds, are under discussion. Comparable reactions like in above mentioned sludges take place in case of contact of collected flue dusts with water. Collected flue dusts are so fine and heterogeneous substances that, with ragard to their structure, composition and fraction, they are unstable from the standpoint of physical and mechanical properties, too.

Alternatively, still prior to stabilization metallurgical sludges or other unstable components can be mixed at least partly with at least one other component of produced briquette, which otherwise does not require stabilization. In this manner prepared base mixture of unstable and stable components is stabilized by adding of the stabilizing agent along with composite action of water, subsequently exposed to it for stabilization time and then, after expiration of this stabilization time, mixed with remaining components of complete briquette mixture at required ratio. It is usually in acount to realize significant part of mixing of particular components prior to stabilization of base mixture. Adding of remaining components if you like remaining amount of them to this mixture for required ratio is suitable to be realized along with its mixing with a binder and water only prior to its treatment for briquettes. In this phase base mixture is then preferably filled only by components such as undersize coke or the most fine fractions of ferritic portion, which increase effect of a binder and act for higher resulting strength and abrasive resistance of produced briquette eventually make possible to decrease an amount of used binder.

It is naturally possible to mix unstable components with all other components of produced briquette at required ratio together immediately, and then the complete such prepared briquette mixture is subjected to stabilization by adding of the stabilizing agent along with composite action of water and subsequently cured for stabilization time. All mixing of basic components or its significant part is thus possible to carry out in one operation which substantially increases effeciency of whole production of briquettes, homogenizes briquette mixture and gets more uniform final composition of briquettes.

The principle of the invention in the following consists in the fact that stabilization time of at least 1 to 30 days is as at rule.

Metallurgical sludges or other unstable components are preferably stabilized by the stabilizing agent on the base of cement, lime or lime-cement mixture in amount of 1 to 28 kg per 100 kg of metallurgical sludge along with composite action of water which is added into stabilization process respectively or which is present in metallurgical sludges. Regarding to relatively long stabilization time, in this manner treated material is precompacted with advantage for blocks because of their good storage life and handleability. After expiration of stabilization time and prior to factual compacting of addition briquettes, it is naturally necessary to crush these blocks for crushed material of required size.

In final phase of the method of production the addition briquettes are treated by compacting or ramming under the pressure of, for example, 5 to 50 MPa, and that along with eventual composite action of vibrations, in the interest of their sufficient strength and integrity. This pressure is at the same time directly proportionate to shape and size of produced addition briquettes.

In this way produced addition briquettes then have got required lumpiness, abrasive resistance, strength, they retain a good meltability, chemical, mechanical and volume stability and their shape is given by requirements of customers in terms of charge.

By means of the solution according to the invention, decrease of expenses on storage of wastes on dumping grounds, and that including dangerous substances, savings resulted in utilization of ferritic portions of sludges and collected dusts in the steel and pig iron production, savings resulted in utilization of energy of coke and carburizing properties of coke, graphite and calcinated petroleum coke, decrease of portion of purchased metal bearing raw materials for the charge of steel-making and blast furnaces, savings of slag-forming additions and savings of energy in the production by utilization of secondary raw materials thus take place.

### Description of the Preffered Embodiment

### Example 1

An addition briquette according to the first exemplary embodiment of the invention comprises 89% by Wt. of undersize coke originating in its production, transport into blast-furnace top and the like, further 9% by Wt. of cement as a binder and water in the rest. These addition briquettes can be used as an admixture for blast-furnace charge serving as an additional source of energy and the carburizing agent, or as the carburizing agent for steel-making charge.

In the method of production of this addition briquette, undersize coke, in this case with lumpiness to 10 mm, together with a binder and water are mixed mutually and then compacted under the pressure of about 15 MPa along with composite action of vibrations for hexagonal prism weighing about 1.4 kg.

### Example 2

An addition briquette according to the second examplary embodiment of the invention comprises 45% by Wt. of stabilized metal bearing metallurgical sludges, 20% by Wt. of undersize coke, 15% by Wt. of graphite, 15% by Wt. of lime-cement mixture as a binder, water in the rest.

In this example used metal bearing metallurgical sludges comprise in amount of weight 58.6% of Fe, 1.06% of MnO, 1.48% of MgO, 2.76% of Zn, 1.50% of SiO₂, 4.01% of CaO and further already unnoticable amount of further elements, such as S, Cr, Pb, Cu, Ni and of their oxides, such as Al₂O₃, TiO₂, or of their salts, such as CaF₂ and so on.

Metallurgical sludges are at first stabilized in mixing device by admixing of the stabilizing agent and then exposed to its action for stabilization time with the object of ending of reactions taking place in them. The stabilizing agent is cement in amount of 9 kg per 100 kg of metallurgical sludge in presence of water in amount of 2 to 3 litres needed for optimum mixing of metallurgical sludge with the stabilizing agent. The stabilization time attains 8 days and the metallurgical sludges stabilizing themselves are compacted for blocks for this curing. Then the blocks are crushed for particles of about 0.1 to 20 mm grain size. The crushed stabilized metallurgical sludges are mixed in mixing device at a given ratio according to requirements of customers with furher components, in this case with undersize coke and graphite, as well as with a binder and water and then again compacted under the pressure and with action of vibrations for the shape of addition briquettes like in example 1.

### Example 3

An addition briquette according this examplary embodiment of the invention comprises 45% by Wt. of metal bearing metallurgical sludges like in example 2, 20% by Wt. of stabilized collected metallurgical flue dusts, 15% by Wt. of ferritic portion in the form of scale, 15% by Wt. of cement as a binder, water in the rest.

The addition briquette is made by mixing of all in it contained basic components, including unstable metallurgical sludges and collected flue dusts, with the stabilizing agent, then water in amount needed for attainment of wetted mixture is added and then this complete briquette mixture is cured for stabilization time. Lime-cement mixture in amount of 9 kg per 100 kg of stabilized mixture acts as the stabilizing agent. The stabilization time attains 15 days and because of better storage life, the briquette mixture is compacted for blocks for this curing. Then the blocks are crushed for particles of about 0.1 to 20 mm grain size.

The crushed briquette mixture is then only mixed with a binder and water for compacting of briquettes and then, preferably still after maturing, which attains about 28 days, these briquettes are chargable.

### Example 4

An addition briquette according to the fourth examplary embodiment of the invention comprises 25% by Wt. of steel shot, 20% by Wt. of scale, 15% by Wt. of cast-iron chips, that is 60% by Wt. of ferritic portion together, then further 20% by Wt. of stabilized metallurgical collected flue dusts, 15% by Wt. of cement as a binder and water in the rest.

As to used collected metallurgical flue dusts it is the question of essentially conformable material to metallurgical sludges which is only retained by different technology.

The addition briquette is made similarly like in example 3, the difference is only in that the unstable collected metallurgical flue dusts in mixture with the whole portion of steel shot, which represents 25% by Wt., and only half portion of scale, which represents 10% by Wt., are subjected to stabilization. Cement in amount of 7 kg per 100 kg of stabilized mixture acts as the stabilizing agent. The stabilization time attains 10 days. After its expiration remaining 10% by Wt. of scale and the whole portion of cast-iron chips, which represents 15% by Wt., are added into mixture, the mixture is mixed along with adding of a binder and needed amount of water. Then the complete briquette mixture is compacted for briquettes along with composite action of vibrations.

### Field of the Application

The solution according to the invention can be used for treatment of essentially all types of metallic and non-metallic materials originating in the metallurgical process as secondary products including of return wastes from metallurgical plants and for their reusing in metallurgical processes.

## Claims

1. A method of the production of an addition briquette for utilization in a charge into metallurgical units comprising 50 to 98% by weight of metal bearing and/or non- metallic metallurgical wastes in the form of fine powdery portions, fines and/or stabilized metallurgical sludges, collected flue dusts or other originally unstable substances and their mixtures as a basic component, further 1 to 25% by weight of binders, water and eventually accompanying waste admixtures in the rest, wherein metallurgical sludges or other unstable components are at first mixed at least partially with at least one other component of said briquette still prior to the stabilization and in this manner preparing a base mixture of unstable and stable components which is subjected to the stabilization by adding of the stabilizing agent along with composite action of water and subsequently cured for the stabilization time of at least 1 to 30 days and then, after expiration of this stabilization time said base mixture is mixed with water, a binder and remaining components of a complete briquette mixture at a required ratio wherein the complete briquette mixture is treated under the pressure for a shape of briquettes.

## Patentansprüche

1. Verfahren zur Herstellung eines Zusatzbrikettes für die Charge in die metalurgischen Schmelzaggregaten, enthaltend 50-98 Gew.% von metallhaltigen und/oder Nichtmetall-Hüttenabfällen in Form von feinen staubförmigen Anteilen, der feinen Fraktion und/oder von stabilisierten Hüttenschlämmen, Hüttenstaub oder anderen ursprünglich instabilen Stoffen und deren Mischungen als Grundkomponente, weiter 1-25 Gew.% von Bindemitteln, als Rest Wasser und gegebenenfalls begleitende abfallartige Beimischungen, wobei die metallurgischen Schlämme oder andere instabile Komponenten noch vor Stabilisierung zuerst wenigstens teilweise mit einer anderen Komponente des herzustellenden Briketts vermischt werden, wonach eine derart aufbereitete Grundmischung von stabilen und instabilen Komponenten durch Zugabe des Stabilisators unter Mitwirkung von Wasser der Stabilisierung unterzogen, nachdem der Wirkung der Stabilisierungszeit von mindestens 1 bis 30 Tagen ausgestellt wird, und nach Ablauf dieser Stabilisierungszeit dieses Grundgemisch im gewünschten Verhältnis mit Wasser, Bindemittel und den restlichen Komponenten der kompletten Brikettmischung vermischt, wonach diese komplette Brikettmischung unter Druckwirkung in die Form von Briketts verarbeitet wird.

## Revendications

1. Procédé de fabrication d'une briquette d'addition pour l'utilisation dans la charge dans des unités métallurgiques comprenant 50 à 98% en poids de déchets métallurgiques contenant des métaux et/ou de déchets métallurgiques non métalliques sous forme de portions de poussière fine, d'éléments fins et/ou de boues métallurgiques stabilisées, de poussières de carneau ou d'autres substances à l'origine instables et leurs mélanges comme une composante de base, plus 1 à 25% en poids de liants, le reste est composé d'eau et d'adjuvants des déchets éventuels, quand les boues métallurgiques ou d'autres composants instables sont d'abord mélangés au moins partiellement avec au moins un autre composant de la briquette avant la stabilisation et de cette façon, on prépare un mélange de base des composants stables et instables qui est soumis à la stabilisation par ajout d'un agent de stabilisation avec l'action composite de l'eau, puis il est soumis aux effets de stabilisation pendant 1 à 30 jours et puis, après l'expiration de la période de stabilisation, le mélange de base est mélangé avec de l'eau, du liant et d'autres composants restants du mélange complet utilisé pour fabriquer des briquettes dans la proportion requise et ce mélange complet est traité sous pression pour obtenir la forme de briquette.
